# EUROPEAN PATENT APPLICATION

(11) **EP 4 201 552 A1**
(43) Date of publication of application: **28.06.2023**
(21) Application number: 21217624.2
(22) Date of filing: 23.12.2021
(51) Int. Cl.: B22F 1/062, B22F 1/142, B22F 10/85, B22F 12/50, B22F 12/90, B22F 10/18, B22F 12/13, B22F 12/53, B33Y 40/10, B33Y 70/00, B21C 47/04, B21C 47/18, B21C 47/26, B21F 23/00, B23K 26/342, B21B 45/00, C03C 25/6208

(54) **SPOOLING AND UNSPOOLING APPARATUS, SYSTEMS AND METHODS**

(71) Applicant: D. Swarovski KG, 6112 Wattens (AT)
(72) Inventor: HAUSER, Daniel, 6065 Thaur (AT); NIGG, Daniel, 6020 Innsbruck (AT)
(74) Representative: Keltie LLP

(57) **Abstract**

Aspects of the present invention relate to apparatus, systems and methods for heat-assisted spooling and unspooling of filament or rod materials for use in 3D printing systems and methods. Described is a system or apparatus for spooling or unspooling of a filament or rod, the system or apparatus comprising a heat source configured to provide heat to the filament or rod; and a rotatable member configured to rotate around its central axis of symmetry so as to spool the filament or rod onto the rotatable member or off the rotatable member. Methods for spooling or unspooling of a filament material of e.g. glass or metal are also described.

## Description

### TECHNICAL FIELD

The present disclosure relates generally to glass spooling and unspooling systems for use in 3D printing apparatus and to the glass objects produced therefrom. Methods for laser assisted spooling or unspooling of printing materials, such as glass or metal, are also described.

### BACKGROUND

3D printing or 'additive manufacturing' (AM) refers to processes in which an object is manufactured by adding material sequentially to itself or to another material, typically by laying down successive layers or the material under a computer-controlled process, in order to create often complex 3D structures, according to a 3D model. Techniques for 3D printing that have been used in connection with glass and other materials (e.g. polymers, metals) include Fused Deposition Modeling (FDM) and Fused Filament Fabrication (FFF), which rely on melting of a rod or filament of the feedstock material (generally within a 'nozzle') in order to lay down layers of the molten material so as to form a desired three-dimensional shape.

FDM and FFF printing processes generally require a continuous feed of printing material for the duration of a print. If the printing material flow is not continuous, cracks and airgaps may appear in the printed part while printed. Such airgaps prevent the printed part from being sealed against liquid and reduce its strength (e.g. in post-print processing).

For example, WO2018/163006 A1 describes a 3D extrusion printing system for printing high melting temperature materials such as glass. The system comprises a heated chamber, a printing base plate mounted inside the heated chamber, a cooling unit mounted outside the heated chamber and surrounding the printing nozzle, and a nozzle heating unit mounted around the printing nozzle inside the heated chamber. In this system the printing material in the form of a rod is intended to be pulled by a feeding mechanism from the upper side of the nozzle and heated while passing through the nozzle. WO2018/163007 A1 describes a system for continuous filament feeding in which the end of one rod feedstock of a printing material is bonded to an opposing end of a following rod feedstock in a 'bonding station' so as to provide a continuous feedstock to and from the printing nozzle.

In some alternative 3D printing systems, the printing material - rather than being provided in the form of a rod - may be provided in the form of a spool, which can allow for much larger amounts of printing material and, hence, longer prints, to be used before recharging or changing the feedstock. In this way, any need to join opposing ends of adjacent feedstocks can be obviated or at least minimised. On the other hand, a spool of material for printing must be continuously unspooled / unwound during printing. Although this approach may be convenient for certain materials of feedstock, e.g. metals or polymers, which may have good inherent flexibility, especially when in relatively thin filament form, significant challenges can arise when the printing material is relatively inflexible, such as glass. Particularly difficulties exist in how to unwind / unspool the glass printing material for feeding into the printing head at an appropriate rate for printing.

It is an aim of the present invention to address one or more of the disadvantages associated with the prior art and/or identified above.

### SUMMARY OF THE INVENTION

In a first aspect there is described a system and an apparatus for spooling or unspooling of a filament or rod material, such as glass or metal rods / filaments, the system or apparatus comprising a heat source; and a spooling or rotatable member configured to rotate around its central axis of symmetry. The heat source is arranged to deliver heat energy for melting or softening of the filament material adjacent the spooling member (or at least adjacent the growing or decreasing spool of material) so that the filament material is softened sufficiently to allow coiling or uncoiling of the material onto or from the spooling member before solidifying once again.

It will be appreciated therefore, the in various aspects and embodiment this disclosure and invention relates to a 'system', and in other aspects and embodiments this disclosure and invention relates to an 'apparatus'. Systems and apparatuses may therefore be defined and claimed separately.

In such aspects and embodiments, the spooling member may be coupled with a motor for causing powered rotation of the spooling / rotating member.

Typically, the filament or rod material is fixed to the rotatable member my any conventional means in the art such as a clamp or glue. In embodiments the filament or rod material may be fixed to the rotatable member by a metal plate preloaded with a spring to secure the first end of the filament or rod material to the rotatable member.

Suitably, the heat source is directional or targeted, such that it may not be necessary to heat the environment in which the filament material is present. In other words, a directional heating source may advantageously be targeted directly towards the filament material / feedstock. In embodiments, the heat source is beneficially a laser. In other embodiments, the heat source may be selected from a plasma torch, a gas torch, an electron beam, an ion beam, an inductively heated metal part and combinations thereof.

The system or apparatus may further comprise a heat source controller so as to control the activity and power of the heat source. In some embodiments, in use, the heat source is configured / controlled to provide a continuous source of heat throughout the period during which the filament material is being spooled or unspooled. In some embodiments, the heat source may be operable to deliver a constant amount of heat energy per unit time, so that the filament is heated uniformly along its length during spooling or unspooling. In some embodiments, the heat source is controlled according to the desired temperature of the filament material or at least the surface temperature of the material at the target region, to enable optimal and/or the desired rate or spooling or unspooling. As such, the heat source controller may comprise a feedback mechanism for adjusting the power or temperature of the heat source according to one or more factors, such as the temperature of the feed stock, the desired temperature of the feed stock, the speed / rate of spooling or unspooling (e.g. the linear speed of movement of the feed stock prior to spooling or after unspooling, or the rotational speed of the spooling or rotating member) or the desired speed / rate of spooling or unspooling, the mass of feedstock to be spooled or unspooled in a particular unit time, the thickness of the filament / rod of feed stock, or the material or composition of the feed stock.

In various embodiments, the system or apparatus may comprise a temperature sensor for monitoring and optionally signaling the temperature of the filament material at the point of softening to the heat source controller in order to control the amount of heat energy delivered to the filament material.

The heat source e.g. the laser, and the spooling member may be orientated perpendicular to each other or at any other convenient angle, according to preference or requirements.

The system or apparatus may also comprise a pushing or a pulling mechanism in order to cause the filament feed material to be drawn towards or away from the spooling member at a desired linear rate. Suitably, the pushing or pulling mechanism is directional so as to direct the material to be spooled towards the correct point / region of the spooling member, or to direct the unspooling material towards a desired destination, such as a 3D printing nozzle. The pulling mechanism may conveniently be part of a 3D printing apparatus, e.g. associated with a printing nozzle to deliver a desired amount of filament feedstock to the nozzle per unit time for printing.

The spooling / rotating member is configured to accommodate a spooled material, such as a coiled glass or metal rod. The spooling / rotating member may be formed from any suitable material, such as a material from the group consisting of: metals, metal alloys, or polymers. For example, including stainless-steel or metal carbides such as silicon carbide. Typically, the spooling member is a metal substrate such as a stainless-steel substrate, but a polymer substrate is also envisaged. Suitably, the spooling member comprises a cylindrical body for each of spooling and unspooling, in use. The cylindrical body may have any desired diameter and length: for example, according to the size of the apparatus, the thickness of the filament material to be spooled, or depending on the intended diameter of the spooled material. Advantageously a cylindrical substrate allows for the melting position to remain in substantially the same location throughout the spooling or unspooling process.

In embodiments, the heat source may comprise at least one laser, typically at least one CO₂ laser, although any other convenient or desirable lasers may alternatively be used. There may be one, two or three lasers, according to the type or laser (e.g. CO₂, CO, UV laser diode, or light sources in general), the power of the laser, the amount of material to be softened (e.g. the thickness of the filament material) and the desired / target speed of spooling or unspooling.

In some embodiments there may be one laser source. In some such embodiments, the laser beam may be split (e.g. with a beam splitter) into two, three or more separate laser beams so as to provide heat energy to more than one location on the target filament.

In embodiments comprising a laser heat source, the intensity of the laser may be at least about 1 and at most about 10 W/mm², such as between about 2 W/mm² and 8 W/mm² or between about 3 W/mm² and 7 W/mm². In some embodiments, the laser has an intensity of 4 W/mm², 5 W/mm² or 6 W/mm².

The laser may have a central wavelength of at least about 9 µm and at most about 12 µm. Suitably the laser has a central wavelength of between about 9 µm and 11 µm, more suitably between about 9.3 µm and 10.6 µm, and most suitably between about 9.6 µm and 10.6 µm, such as, 10.3 µm, 10.4 µm, 10.5 µm and most suitably, 10.6 µm. For example, the laser may be a CO₂ laser.

In some other embodiments, the laser may have a central wavelength of at least about 3 µm and at most about 6 µm, such as between about 4 µm and about 6 µm, between about 5 µm and about 6 µm, or between about 5.2 µm and about 6 µm. In embodiments, the laser may have a central wavelength of 5.0 µm, 5.1 µm 5.2 µm, 5.3 µm, 5.4 µm or 5.5 µm. For example, the laser may be a CO laser.

In still other embodiments, the laser may have a central wavelength of at least about 2 µm and at most about 4 µm, such as between about 2 µm and about 3 µm, or between about 2.2 µm and about 2.8 µm. In embodiments, the laser may have a central wavelength of 2.3 µm, 2.4 µm, 2.5 µm or 2.6 µm. For example, the laser may be a laser diode.

The system or apparatus may further comprise apparatus for focussing the heat source or laser onto the filament material. In embodiments, the means for focussing the heat source or laser onto the filament material may be a mirror or a lens or combinations thereof. In various embodiments, a plurality of mirrors and/or lenses may be used. For example, the system or apparatus may comprise one mirror, two mirrors or three mirrors, depending on the position of the laser source and the location at which the heat energy is to be delivered. Alternatively, the system may comprise at least one lens, e.g. one lens, two lenses or three lenses, depending on the position at which it is intended to deliver heat energy to the filament material (relative to the location and orientation of the laser source, and the size (diameter) of the laser beam that is desired to be delivered.

Typically, the diameter of the laser beam will be selected according to the diameter of the filament material to be heated. The system or apparatus may further comprise one or more positional adjustment mechanism for adjusting the position, angle and/or orientation of the one or more mirror, one or more lens, or one or more beam splitter.

The resulting temperature at the surface of the glass rod is determined by speed, laser intensity and wavelength as well as the material of the filament (e.g. the glass composition).

Without wishing to be bound by theory, the temperature at the surface of the glass rod is also limited by the temperature dependence of the wavelength dependent absorption and transmission cross sections, the temperature dependence of the thermal diffusion coefficient as well as the temperature dependence of the radiative emissivity, assuming that no chemical reactions and/or ablation effects are triggered. For example, if a CO laser at 5 µm central wavelength is used for heating, in the beginning volumetric heating is achieved due to the larger penetration depth (∼100x µm, hundreds of microns) of the radiation at 5 µm into the glass rod. Above the glass temperature, the ion as well as electron mobility significantly increases giving rise to an increased absorption coefficient, which decreases the penetration depth. This asymptotically leads to a far shallower penetration depth of the CO-laser (x µm, microns) which yields surface heating.

Therefore, independently of the heating method, the spooling speed limits will approach the measured speeds for the CO-laser case. This effect becomes more significant the larger the rod diameter.

The speed of rotation of the rotatable or spooling member may be any angular speed, depending on one or more factors, such as the desired speed of spooling or unspooling (where the unspooling speed may be linked to the desired or maximum printing speed), the type or power of heat source, the filament diameter and/or the composition of the filament material. Suitably, the linear speed of spooling or unspooling of the spooling material may be between about 1 mm/s and about 20 mm/s, between about 2 mm/s and about 18 mm/s, between about 3 mm/s and about 16 mm/s, between about 4 mm/s and about 14 mm/s, or between about 6 mm/s and 12 mm/s. In some preferred embodiments, therefore, the speed of spooling may be at least about 8 mm/s and at most about 10 mm/s.

The system or apparatus may comprise a component for measuring the temperature of the filament material that is being heated; for example, the component may comprise a heat sensor, an IR camera, a pyrometer or combinations thereof.

When the filament material is glass, it may be provided in form of a rod or a spool. The glass may have any desirable composition; for example, it may be a Schott glass or a Bullseye glass; beneficially, the glass may be an AR-Schott glass, a soda-lime glass, a quartz glass or a borosilicate glass.

The diameter of the glass rod may be between about 0.5 mm and about 18 mm, such as between about 1 mm and about 15 mm, between about 2 mm and about 12 mm, or between about 3 mm and about 10 mm. In embodiments, the diameter of the glass rod may be about 2 mm, about 4 mm, about 6 mm, about 8 mm, about 10 mm, or about 12 mm.

In another aspect, there is provided a method for (a) coiling, or (b) uncoiling a glass or metal filament, the method comprising the following steps:
(i) providing a heat source;
(ii) heating the filament with the heat source to a target or process temperature; and
(iii) simultaneously rotating the filament about a central symmetry axis of the coil in (a) a coiling direction, or (b) an uncoiling direction.

Any suitable heat source may be provided; particularly, a heat source as described in relation to any aspect or embodiment herein: for example, the heat source may suitably be a laser, such as at least one CO₂ laser, and/or at least one CO laser.

The step of rotating of the glass or metal filament may be achieved by a spooling or rotating member as described in connection with any aspect or embodiment herein.

The heat source, e.g. the laser, and the spooling or rotatable member may be orientated with respect to each other at any desired angle. For example, in embodiments, the laser is arranged perpendicular to a long axis (e.g. axis of rotation) of the spooling member.

The heat source or laser may be focused onto the substrate using one or both of at least one mirror and/or at least one lens as described elsewhere herein.

The laser may have a central wavelength as defined according to any of the aspects and embodiments set out herein.

The target or process temperature is the temperature to which it is desired to heat the filament to soften the material to a sufficient viscosity for coiling or uncoiling. Desirably, the surface temperature of a glass filament needs to be carefully controlled so that the heat allows the material to soften to a sufficient extent to enable bending / coiling of the material, while avoiding undesirable melting or ablation of the heated glass at too high temperatures. As such a target temperature between about 800°C and 1,300°C is typically preferred for glass spooling / unspooling. In embodiments, the target / process temperature may be at least about 800°C, or may be at most about 1,300°C. Suitably, the process temperature may be between about 850°C and 1,250°C, between about 900 and 1,200 or between about 950°C and about 1,150°C. In various embodiments, depending on the material of the filament, the process temperature may be approx. 900°C, more suitably, approx. 950°C, still more suitably approx. 1,000°C, and most suitably approx. 1,040°C. For metal spooling and unspooling embodiments, the target temperature (surface temperature at which the heat source is directed) will likewise be adapted to the type and properties of the metal; in particular, so as to avoid undesirable melting or ablation.

In accordance with these methods, the composition and size / diameter of the glass or metal filament may be selected as desired according to the relevant 3D printing feeding mechanisms.

Typically, in apparatuses and methods of the invention, the diameter of the laser beam is correlated with the diameter of the rod (or filament) of glass or metal. In order to achieve the best spooling and unspooling results, the laser power is generally decreased if the laser diameter is decreased and *vice versa* (e.g. proportionate to change in cross-sectional area of the beam). This can ensure a constant maximum light intensity, which can be configured to provide a heating energy just below the ablation point / temperature of the filament material. This can help to achieve a maximum spooling speed at which the filament material is softened at a maximum rate.

Similarly, the spooling speed is tightly controlled in conjunction with the heat energy directed to the filament from the heat source, e.g. the laser intensity. If the spooling speed is too low, the temperature on the surface of the spooling / unspooling material may increase above the ablation temperature of the glass. On the other hand, if the spooling speed is too high, the timescale of thermal diffusion will be too small to heat and melt the filament to a sufficient depth to enable bending. In embodiments, the temperature on the surface of the filament is monitored by a temperature sensor, particularly a remote temperature sensor, such an IR camera a pyrometer, or other heat sensor.

Beneficially, the rotational speed of the spooling member may be adapted in dependence on the thickness / radius of the spool (wherein the thickness of the spool includes the thickness of the spooling member and any overlying coil of filament) to ensure a constant, desired linear velocity at the circumference of the spool as discussed elsewhere herein; e.g. a linear speed of about 6 to 10 mm/s (or any other desirable speed) may match the optimal speed of 3D printing with the filament material in a 3D printing system.

In some embodiments of the methods and apparatuses of the invention, as described elsewhere herein, more than one heat source may be used, for example, two or three lasers may be used. The one or more laser(s) may be CO₂ lasers. Advantageously, use of more than one laser (and/or other heat source) may provide more rapid heat transfer to the filament material, which may enable an increased rate of target material softening and consequential increased speed of spooling / unspooling. Accordingly, it may be possible to achieve a relative linear speed of rotation at a point of the circumference of the spooling member / filament of up to about 50 mm/s, such as between about 20 mm/s and about 50 mm/s relative to a point on the circumference of the spool. It will be appreciated - as noted elsewhere herein - that the angular speed of rotation will be dependent on both the radius (or diameter) of the spooling member and the depth of the material overlying the spooling member, and this angular speed may, in accordance with embodiments of the disclosure, be adjusted periodically in order to maintain a substantially constant (or desired) linear speed of a point on the circumference. In this way, increased speeds of 3D printing with glass or metal filament feedstocks can be provided.

As described elsewhere herein, the filament material may be fed towards the spooling member at a desired speed during a spooling action, or may be pulled away from the spooling member during an unspooling action.

'Pulling' of a filament during an unspooling process may be performed, for example, by the filament feeding system of a 3D-printing system.

In various embodiments, as will be appreciated, the same apparatus for spooling and unspooling may be used.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, unless it is expressly stated herein, all embodiments and/or features of any embodiment can be combined in any way and/or combination, unless such features are incompatible or are otherwise explicitly indicated to be incompatible or non-combinable. The Applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will be described, by way of example only, with reference to the accompanying drawings, in which:
**Figure 1** shows a schematic representation of an extrusion printer nozzle of a 3D printing apparatus comprising a filament feeding system.
**Figure 2** is a schematic front view of a 3D printing system according to the prior art, comprising a filament feeding system comprising a filament loading station and a filament bonding station for joining the ends of adjacent feedstock rods.
**Figure 3** shows a schematic representation of: (A) a system for laser assisted spooling of a glass filament: side view (left) and front view (right); (B) a system for laser assisted unspooling of a glass filament: side view (left) and front view (right); and (C) exemplary laser arrangements for laser assisted spooling and unspooling of glass filaments according to various embodiments of the disclosure.

### DETAILED DESCRIPTION

Those skilled in the art will be aware that the present disclosure is subject to variations and modifications other than those specifically described. It is to be understood that the present disclosure includes all such variations and modifications. The disclosure also includes all such steps, features, compositions, and compounds referred to or indicated in this specification, individually or collectively, and any and all combinations of any one or more of such steps or features.

For convenience, before further description of the present disclosure, certain terms employed in the specification are defined. These definitions should be read in the light of the remainder of the disclosure and understood as by a person of skill in the art. Unless defined otherwise, all technical and scientific terms used herein have the same meaning as commonly understood by one of ordinary skill in the art to which this disclosure belongs. Any methods and materials similar or equivalent to those described herein can be used in the practice or testing of this disclosure, exemplary methods and materials are now described.

All publications mentioned in this disclosure are incorporated herein by reference in their entirety.

The articles 'a', 'an' and 'the' are used to refer to one or to more than one (i.e. to at least one) of the grammatical object of the article.

As used herein, the term 'comprising' means any of the recited elements are necessarily included and other elements may optionally be included as well. 'Consisting essentially of' means any recited elements are necessarily included; elements which would materially affect the basic and novel characteristics of the listed elements are excluded, and other elements may optionally be included. 'Consisting of' means that all elements other than those listed are excluded. Embodiments defined by each of these terms are within the scope of this invention.

As used herein the term 'spooling' means to coil (or wind) a material, for example, a glass (or metal) rod or filament from a linear shape to a coiled shape. As used herein the term 'unspooling' means the opposite of 'spooling', i.e. to unwind a material, for example, a glass (or metal) rod or filament from a coiled or winded shape into a substantially linear shape.

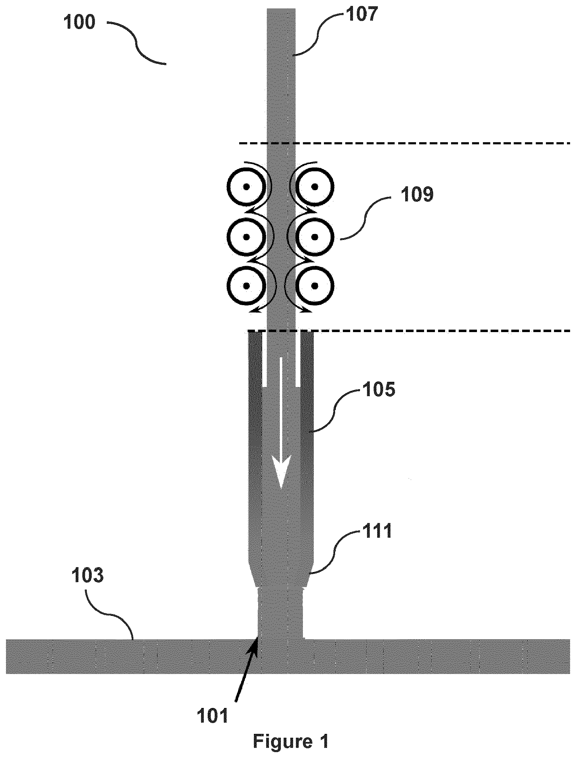

The present disclosure generally relates to systems, apparatuses and methods for laser assisted spooling or unspooling of glass or metal filament materials. In some aspects and embodiments, advantageously, the laser assisted spooling or unspooling system may be integrated with a 3D printing apparatus (or portion thereof) such as an extrusion printer nozzle feeding system of a 3D printing apparatus as depicted in Figure 1.

In more detail, Figure 1 shows a schematic representation of an extrusion printer nozzle of a 3D printing apparatus (100) comprising a filament feeding system (109). Layers of 3D printed material (101) are laid down onto a heated base plate (103) using a heated nozzle (105). The feedstock printing material filament (107) is pulled (or drawn) by the filament feeder (109) and advanced towards the nozzle tip (111). As the filament material passes through the heated nozzle (105) the material melts so that it is a liquid at the time it exits the nozzle tip (111) in order to lay down a 3D printed material (101). The printing material (107) fed into such a system (100) is typically in the form of a long rod but for certain limited applications may be a spool (not shown). In cases where the printing material (107) is derived from a spool, the present invention advantageously provides for systems and methods for unspooling such a spooled printing material.

Various aspects and embodiments of the disclosure are outlined below.

### Laser-Assisted Spooling or Unspooling

Filament-based 3D printing of glass or metal typically utilises rods or filaments of finite length, which are supplied to a heated extrusion nozzle using a feeding system, which may form part of a 3D printing apparatus / system, such as depicted in Figure 1, or as described in WO 2018/163007 A1. The molten material, e.g. glass, is subsequently deposited onto a build platform / plate that may itself be heated, such that a printed layer of material is formed along the printing direction.

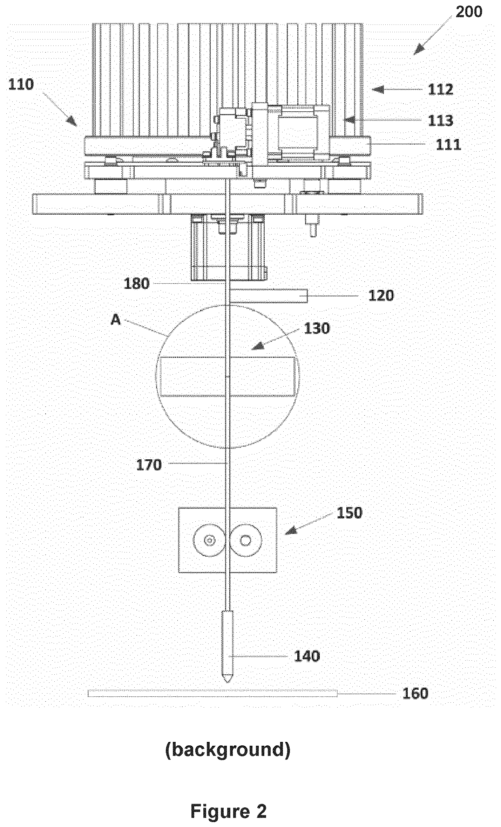

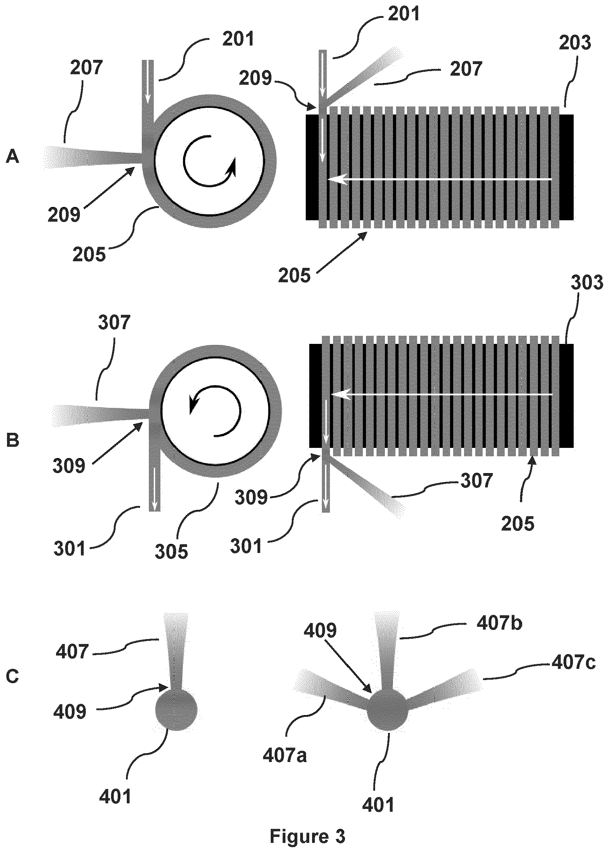

A typical filament feeding system for glass 3D printing applications is described for example in WO 2018/163007 A1 and with reference to Figure 2. In various aspects and embodiments, the filament feeding system (200) of WO 2018/163007 may be employed in a glass 3D printing apparatus / system (100) as described above and with reference to Figures 1 and 3.

With particular reference to Figure 2, the filament feeding system (200) comprises a filament loading or charging station (110) for sequentially loading individual filaments of material for printing into a printing nozzle or head (140). A detection station (120) is provided for detecting the presence / end of the printing material (glass filament), and is configured to provide a signal to a bonding station (130) for connecting the end of the leading filament of printing material to the beginning of the following filament of printing material. A feeding mechanism (150) in the form of opposing rotating wheels which contact opposite sides of the glass filament to provide a driving force on the filament is provided for feeding the printing material into the printing head (140). In this apparatus, the glass filament (170) is melted in the printing head (140) such that molten printing material can be deposited on a moving build platform / plate (160).

However, whilst a filament feeding system such as that depicted in Figure 2 and described in WO 2018/163007 A1 overcomes some of the problems in the prior art of 3D printing of objects using discrete rods or filaments; there are nevertheless potential disadvantages. For example, typically, if one glass rod is consumed during printing of a 3D object (i.e. before the object is complete), a second rod must be loaded into the feeding system. The feeding system of WO 2018/163007 A1, which is configured to join adjacent feedstock filaments together, may lessen the potentially detrimental impact of changing feedstock during 3D printing of a single object; however, the abutting rods still form a surface-to-surface interface that is eventually pushed through the extrusion nozzle and melted before being incorporated into the 3D object. This surface-to-surface interface may trap impurities and/or air, such that, on printing, striae and/or bubbles could form inside the printed glass layer. Any such defects, even minor, can significantly lower the optical quality of the printed article and/or create points of weakness in the printed structure, and is a critical issue in the challenge of 3D-printing fully transparent, striae and bubble-free glass. One or more of these disadvantages are addressed by the laser spooling / unspooling system of this disclosure, as described herein.

First, in order to improve optical quality of 3D printed glass objects, it is desirable to provide the feeding material / feedstock in the form of a spool rather than as a plurality of discrete rods. In this way, the problem of how to join the opposing ends of two adjacent feedstocks used in the same printing process may be avoided. In addition, it will generally be significantly easier to handle, transport and use a (glass) feedstock filament in the form of a relatively compact spool of material (such as a coil), rather than as a (long) linear rod of the same length. Furthermore, a considerable amount of additional material (feedstock) can be packaged into a single spool, which is relatively easy to transport, compared to the amount of the same material packaged in the form of a plurality of rods. In this way, it may be possible to avoid having to change feedstock filaments part-way through the 3D build of a single object, which in turn may avoid the incorporation into a print any potential impurities and/or air at an interface between adjacent print feedstocks. Provision of spooled printing material may also avoid the need to provide potentially complex mitigating measures, such as the bonding (or fusion) station (130) and associated apparatus, such as depicted with respect to the system of Figure 2. However, to carefully bend glass or metal to a desired curvature for spooling (e.g. for storage / packaging), and/or to carefully unspool a glass or metal filament to provide a suitable (e.g. substantially linear) rod or filament for feeding into a 3D printing system, such as that described with reference to Figures 1 and 2 is not trivial. The present disclosure thus provides systems, apparatus and methods for spooling and unspooling of glass or metal filament feedstocks for various applications such as 3D printing.

### Glass Filament Spooling:

When a glass rod is continuously pulled out of a furnace, it cools down quickly to below its glass transition temperature. Such cooling is needed in order to be able to maintain a constant pulling force on the developing rod, and this ensures a high consistency of the rod diameter during the pulling process. However, to subsequently bend a glass rod so that it follows a desired curvature, or to straighten a curved glass filament, a heat source is needed. Beneficially, the heat source is targeted or focused to heat the filament at the desired starting point of curvature or straightening as the filament is coiled or uncoiled respectively.

According to various aspects and embodiments, a laser or heating torch system may be used to provide a directional heat source for spooling or unspooling of a glass (or metal) filament. Laser heat sources are particularly useful since they may provide a highly directional and controllable source of heat. Whilst any suitable heating (e.g. laser) source may be used in accordance with various aspects and embodiments described herein, suitably, a CO₂ laser is chosen as a heating source since it provides a high level of process control over the intensity of laser light and, therefore, over heating temperature. In addition, a CO₂ laser system can be more economical to use, and may be a more ecologic technology compared to e.g. classical torch systems. However, as noted, any other laser source (such as a CO laser) or alternative heating system may be suitable or preferred in certain applications.

A schematic diagram of a filament spooling process according to the invention is shown in Figure 3A, illustrated from the side (left) as well as from the front (right). In these exemplary arrangements, the apparatus is depicted in the context of a glass filament feedstock, but metal feedstocks may also be employed with similar or equivalent apparatus and process features, albeit taking account of any differences in the target heating temperature for the various different materials.

As illustrated, a glass filament (201) is advanced towards and adjacent a rotating or spooling member, which in the depicted embodiment is in the form of a cylinder (203) for receiving the developing glass spool (205) in use. Other configurations of the rotating member may alternatively be used, such as a wheel or similar apparatus. A laser source (not shown) provides a beam of laser light (207) directed towards a side of the glass filament (201) to heat at least a portion of the glass filament (201) to heat the surface of the filament to a temperature of approximately the glass transition temperature in the region designated as the desired bending point (209) of the filament (201), so that it can be properly received on the rotating cylinder (203). Suitably, the heated temperature of the region of the glass filament is slightly above the glass transition temperature (e.g. at around the softening temperature) in order that the viscosity of the glass at the bending point (209) is low enough to enable sufficient bending or straightening for spooling or unspooling. It will be appreciated that the glass transition temperature will depend on the composition of the material to be spooled or unspooled, e.g. the target glass transition temperature may be between about 400°C and 900°C depending on the type of glass (and the softening temperature may be between about 500°C and 1,000°C).

In order to create a spool of feedstock material, generally, at the same time as heating the glass at the target region, the rotating cylinder (203) is rotated about its longitudinal symmetry axis at a controlled, desired rotational speed (e.g. angular velocity) so that the speed of movement of a point on the circumference of the cylinder (or developing spool) matches the speed of linear advancement of the glass filament (201) towards the rotating cylinder (203) to achieve consistent laying down of glass filament on the developing spool (see Figure 2A, 2B).

In various embodiments, a controller is required that communicates with a motor to control the speed of rotation of the rotating cylinder (203). In this way, the speed of rotation can be adjusted in a controlled manner to e.g. reduce the rate of rotation as the radius of the glass spool (205) increases with build-up of glass filament so that the speed of movement of a point on the circumference of the spool (205) is maintained at a substantially constant speed to match the linear advancement of the glass filament to be spooled. In this regard, the controller may receive signals (or input) from sensors and/or vision systems configured to detect changes in the diameter (or radius) of the spooled material on the rotating cylinder (203) and may be configured to provide control signals to a motor or actuator of the rotating cylinder (203) in dependence on the received signals or input.

In various aspects and embodiments, and optionally in addition to adjusting the rate of rotation of the rotating cylinder (203), an actuating member may be provided for moving the rotating cylinder (203) axially relative to the advancing glass filament (201) to control the axial location along the cylinder (203) at which the glass filament (201) is laid down. In this way, an even distribution of glass filament (201) may be achieved along the rotating cylinder (203), which can improve storage and transportation and may also provide benefits in the requirements for speed control of the rotating cylinder (203) during spooling or later unspooling operations during 3D glass printing.

In various aspects and embodiments, in addition to or instead of controlling the rate of rotation of the rotating cylinder (203), the speed of advancement of the glass filament (201) towards the rotating cylinder (203) may be controlled in order that the linear speed of advancement of the glass filament (201) substantially matches a speed of movement of a point on the outer circumference of the rotating cylinder (203) or glass spool (205) during a spooling process. Accordingly, the system may comprise a controller for controlling the speed of linear advancement of the filament prior to heating and subsequent spooling. Optionally sensors for measuring the linear speed of advancement of the filament prior to spooling, and/or the radial speed of the rotating cylinder or circumferential speed of movement of a point on the circumference of the growing spool may be provided. Such sensors may be arranged to provide signals or input into a controller for controlling the linear speed of advancement of the filament towards the rotating cylinder. A feedback system may, in some embodiments, also be employed to control the rotational movement of the spooling member and the linear movement of the filament so that the two speeds are substantially the same to ensure that the filament is not put under undesirable stress or strain during the spooling or unspooling process. It will be appreciated that any suitable speed or movement sensors may be used in accordance with such embodiments of the invention, and the 3D printing / spooling apparatus of the invention may comprise only one general, or more than one dedicated controller for controlling the various components of the system and apparatus.

In various embodiments, the system may further comprise adjusting the power or intensity of the beam of laser light (207) so that an even, desired heating and, hence, temperature of the glass filament (201) at the bending point (209) is achieved throughout the spooling process. Temperature measurements and subsequent power or intensity adjustment may assist achieving the desired temperature of the glass filament (201).

In various aspects and embodiments, the system may comprise controlling the lateral position of the advancing glass filament during the spooling process, such that the juxtaposition of the glass filament (201) and the rotating cylinder (203) or spool (205) is controlled. In this way, the longitudinal axis of the glass filament or rod (201) and, hence, the point of bending (209) of the glass filament (201) can be controlled relative to the axial location along the rotating cylinder (203) or spool (205), e.g. to lay down glass filament at a desired axial position on the cylinder (203), and/or so that the point of bending (209) of the glass filament (201) can be controlled relative to the circumference of the cylinder (203) or spool (205), which may move radially outwards from the central longitudinal axis of the rotating member / cylinder (203) or spool (205) as glass filament builds up during a spooling process. In such embodiments, where the position of the advancing glass filament is adjusted during a spooling process, corresponding adjustments in the position or angle of the laser beam (207) may be required to ensure that the desired bending point (209) is correctly heated to the desired temperature.

It will be appreciated that any suitable sensors may be employed in order to detect the relative position of the glass filament (201) and/or rotating cylinder (203) or spool (205) and to provide signals to a controller (not shown) in order to control the relative position and speed of advancement of the glass filament, and/or to control the speed of rotation and relative axial location of the rotating member / cylinder (203). Similarly, one or more sensors may be provided to detect / measure the temperature of the glass filament at the bending point (209) and to provide input into a controller or control system for adjusting or controlling the laser power or intensity provided to heat the glass filament (201).

As noted above, in embodiments the heat source is particularly a laser, and typically a CO₂ laser; but any other lasers source known to the person skilled in the art may alternatively be used.

As previously described, in various embodiments, the laser may have a central wavelength of at least about 9 µm and at most about 12 µm. Suitably, the laser may have a central wavelength of 10 µm, 10.2 µm or 10.4 µm. In some particular embodiments, the laser has a central wavelength of 10.6 µm.

As previously described, in various alternative embodiments, the laser may have a central wavelength of at least about 4 µm and at most about 7 µm. Suitably, the laser may have a central wavelength of 5 µm, 5.2 µm or 5.4 µm. In some particular embodiments, the laser has a central wavelength of 5.6 µm.

In some embodiments, the apparatus may include more than one laser source. Where more than one laser source is employed, each laser source may have the same or a different central wavelength. In some such embodiments, one laser source may be a CO₂ laser and one laser source may be a CO laser.

The process / glass filament heating temperature may be determined by the composition of the glass used to form the glass filament. For example, the target temperature for the glass rod at the bending point may be at least about 800°C and at most about 1,300°C as previously described. In some particular embodiments, the process temperature may be approx. 1,000°C, such as approximately 1,040°C.

Any suitable glass may be used, for example, the glass may be a borosilicate, quartz or soda lime glass.

Suitably, the laser induced surface temperature of the glass filament should be limited to below the temperature at which glass ablation may occur. For example, generally the temperature should be controlled to be below about 1,300°C (depending on the type / composition of glass) to avoid ablation.

The diameter of the glass filament or rod can be any desired size that is suitable for 3D printing apparatuses and processes. For example, between about 0.5 and 18 mm, between about 1 mm and 15 mm, or between about 2 and 12 mm. In some embodiments, the diameter of the glass filament is at least about 1.5 mm or about 2 mm and at most about 6 mm or about 8 mm. In some embodiments, the diameter of the glass filament is at least about 2 mm and at most about 4 mm, which sizes are suitable for various 3D printing feeding mechanisms currently in use.

The diameter of the laser beam and the diameter of the glass rod are suitably correlated. In order to match and achieve the best spooling (and unspooling) results; the laser power may be decreased if the laser diameter is decreased and *vice versa* in order to maintain the same desired light intensity and heating capacity. For example, this may ensure a constant maximum intensity and, hence, heating of glass to below an ablation temperature. By controlling the glass temperature at the bending point to just below the ablation temperature (e.g. between 50°C and 300°C below; or between 100°C and 200°C below ablation temperature; or alternatively to e.g. within about 25%, within about 20%, within about 15%, within about 10% or within about 5% below the ablation temperature) this may enable the maximum spooling speed to be achieved while avoiding damage to the glass filament.

Beneficially, the spooling speed / linear speed of the glass filament is tightly controlled. If it is too low, the temperature on the surface of the glass may increase above the ablation temperature of the glass. On the other hand, if the speed of the glass filament is too high, given the timescale of thermal diffusion, the laser may not have sufficient time to heat and soften a sufficient proportion of the glass filament at the bending point to allow the filament to be bent and spooled.

Accordingly, the speed of advancement of the glass filament (and hence the spooling speed), or the speed of rotation of the rotating cylinder / spool, as discussed above, may be adapted depending on the diameter of the spool (which affects the radial position of the bending point and effective spooling (or unspooling) point), to suitably maintain a constant spooling speed and, hence, avoid the need to frequently adjust the laser intensity. In embodiments, a velocity of between about 1 and 20 mm/s may be used, such as between about 2 and 15 mm/s or between about 3 and 12 mm/s. In some suitable embodiments a linear glass filament velocity of between about 4 and 10 mm/s may be used in the filament feeding system of the disclosure. As noted above, the speed may also be determined according to the diameter of the glass filament, and the above speeds may be particularly suitable for use with glass filaments having a diameter of between about 2 and 4 mm.

In some embodiments, particularly for glass filaments of relatively larger diameter (e.g. above about 3 or 4 mm, more than one heat source may be used, to provide a more even heat distribution around the circumference of the glass filament and/or to provide more heat energy in a unit time so as to heat a larger volume of glass in the filament within a defined time period. For example, two or three laser (or other heat) sources may be used, as depicted in Figure 3C. Suitably, where more than one laser source is used, the lasers may be arranged at spaced radial positions relative to the glass filament: for example, at about 60°, at about 90° degrees and/or at about 180° from another laser source. It will be appreciated that any suitable laser source may be used. However, more suitably, the at least two lasers may be of the same type, for example, CO₂ lasers as previously described. In some embodiments, depending on the thickness / diameter of the glass filament, using multiple heat sources may allow for an increased spooling speed: for example, two identical heat or laser sources may allow the spooling speed to be doubled. In such embodiments, therefore, a linear speed of movement of a glass filament and consequential spooling speed may be up to at least about 20 mm/s, up to at least about 30 mm/s and at most about 50 mm/s (depending on factors such as filament / rod diameter and composition).

### Glass Filament Unspooling:

By contrast, once a spool of glass filament has been provided for a 3D printing or other application, it is necessary to unspool the glass filament for use in a 3D printing apparatus. Glass rod unspooling may conveniently be achieved by essentially the reverse process to that used for the glass rod spooling process.

As will be appreciated, a straight glass filament or rod is typically pulled by a feeding system of a 3D printing apparatus towards a printer head or nozzle. Typically, such printing heads or nozzles comprise linear passages for movement of the glass filament therethrough. Accordingly, during a 3D printing process, it is typically necessary to provide a (substantially) straight glass filament or rod, in order that it can be received into and pass through the printer head or nozzle without breaking, which would undesirably and inadvertently create a discontinuous supply of glass printing material, which the use of a spool of material seeks to avoid.

As such, in a similar fashion to a glass filament spooling process, heat - typically in the form of energy from laser light - is provided to a designated bending point of the glass filament adjacent a spool of glass filament to be unwound. Again, similarly to the spooling process already described, the unspooling glass filament is heated to a desired glass transition / softening temperature to allow straightening of the glass filament as it is pulled towards the 3D printer head prior to its passage into the nozzle / printer head (see Figure 3B). The temperature of heating of the glass filament and the mechanism for heating of the glass filament for unspooling may be the same as that for spooling, as described above and those details are not repeated here, except, of course, that rotation of the rotating member and linear movement of the developing straightened filament are in the opposite direction.

As illustrated in Figure 3B, a spooled glass filament (301) is pulled towards a rotating cylinder, wheel or spool (303) on which the glass spool (305) rests prior to straightening. A laser source (not shown) provides a beam of laser light (307) directed towards a side of the spooled glass filament (301) to heat at least a portion of the glass filament (301) to a temperature of approximately the glass transition temperature or softening point in the region designated as the desired straightening point (309) of the filament (301) to be properly received by any filament feeding system for example a 3D printing filament feeding system. Suitably, the heated temperature of the surface region of the glass filament is slightly above the glass transition temperature (e.g. between about 500°C and 700°C), e.g. around the softening temperature, in order that the viscosity of the glass at the straightening point (309) is low enough for the straightening / unspooling process.

Generally, when in use in a 3D printing apparatus, the rotating cylinder (303) is rotated about its symmetry axis at a controlled, desired rotational speed so that the speed of movement of a point on the circumference of the cylinder (or developing spool) matches the speed of linear advancement of the glass filament (301) towards a filament feeder of e.g. a 3D printing system (not shown) to achieve consistent straightening of the spooled glass filament to be pulled by the filament feeder (see Figure 2B).

In various embodiments, the speed of angular rotation of the rotating cylinder (303) is adjusted in a controlled manner to e.g. increase the rate of angular rotation as the radius of the glass spool (205) decreases with straightening glass filament so that the (effective linear) speed of movement of a point on the circumference of the spool (305) is maintained at a substantially constant speed throughout the unspooling process.

In various aspects and embodiments, and optionally in addition to adjusting the rate of rotation of the rotating cylinder (303), the rotating cylinder (303) may be moved axially relative to the pulled glass filament (301) to control the axial location along the cylinder (303) at which the glass filament (301) is unspooled. In this way, the glass filament (301) may be unspooled evenly and smoothly along the length of the rotating cylinder (303).

In various aspects and embodiments, in addition to or instead of controlling the rate of rotation of the rotating cylinder (303), the speed of pulling of the glass filament (301) from the rotating cylinder (303) may be controlled in order that the linear speed of pulling of the glass filament (301), by e.g. a filament feeder, substantially matches a speed of movement of a point on the outer circumference of the rotating cylinder (303) or glass spool (205) during a unspooling process. In such embodiments, the system may further comprise adjusting the power or intensity of the beam of laser light (307) so that an even, desired heating and, hence, temperature of the glass filament (301) at the straightening point (209) is achieved throughout the unspooling process. Most suitably, so that the rate of printing can be controlled to a desired, constant speed of deposition. Thus, it may be preferred to control the rate of rotation of the rotating or spooling member so that a constant speed of unspooling and, hence, consistent amount of material for 3D printing may be provided. In this way, the unspooling speed of the filament or rod is accurately matched to the material deposition speed of 3D printing, e.g. to avoid distortion of the filament for stretching (or breaking) or compaction. In some embodiments, the feeding mechanism may control (directly or indirectly) the rate of rotation of the spool, in order to ensure that the feed material (e.g. filament) movement is essentially identical. In some embodiments, therefore, the rotating cylinder may be mechanically or controllably coupled to the 3D printing feeder mechanism so that it is caused to rotate in consequence of the feed material being pulled or pushed through the feeder mechanism of the 3D printing (or other) apparatus. In some embodiments the rotating cylinder may have a low-friction rotation arrangement allowing for passive rotation as the filament it pulled by the feeder mechanism.

In various aspects and embodiments, the system may comprise controlling the longitudinal and/or lateral position of the spooled glass filament (301). Accordingly, the point of straightening (309), may be controlled relative to the 3D printing apparatus, so that the point of straightening (309) of the glass filament (301) can be adjusted to take account of the relative position of the circumference of the cylinder (303) or spool (305), which may move inwards towards the central longitudinal axis of the cylinder (303) or spool (305) as glass filament is removed during an unspooling process. In such embodiments, the position or orientation of the laser or other heat source need not be adjusted as the position at which unspooling commences beneficially remains constant and in line with the 3D printing apparatus.

In some embodiments, however, the apparatus comprises a mechanism for adjustment the target position or angle of the heat source or laser beam (307) to ensure that the desired straightening point (309) is correctly heated to the desired temperature despite potential (minor) movements in the position at which the filament is heated and unwound from the rotating spool. For example, apparatus may be provided for translational and/or rotational adjustments in the position or orientation of the heat source. In embodiments, mechanisms may also or alternatively be provided for adjusting the angle / orientation or position of the heat / laser guiding / focusing devices, such as mirrors and/or lenses.

It will be appreciated that any suitable sensors or other vision devices may be employed in order to detect the relative position of the glass filament (301) and/or rotating cylinder (303) or spool (305) and to provide signals to a controller (not shown) in order to control the relative position and speed of pulling of the glass filament and/or to control the speed of rotation and relative axial or lateral location of the rotating cylinder (303). Similarly, one or more sensors may be provided to detect / measure the temperature of the glass filament at the heating / straightening point (209) and to provide input into a controller or control system for adjusting or controlling the laser power or intensity provided to heat the glass filament (301).

Advantageously, as described above, in various aspects and embodiments, it may be necessary to adjust the rotational speed of the spool and/or the relative position of the spool with respect to the laser/ laser source and 3D printing apparatus, so that the desired bending point of the spooled glass filament is maintained at the correct position for heating by the source of heat. In this regard, it will be appreciated that typically it may be more convenient to adjust the position of a spool of feed material relative to a printer nozzle and 3D printing apparatus, than *vice versa.* For example, in embodiments, the axial position (and optionally the lateral position) of the glass spool may be adjusted during the unspooling process so that the bending point of the glass filament and particularly the point at which the heat or laser source contacts the glass filament remains constant. In other embodiments, the unspooled filament may be maintained at a sufficiently high temperature after unspooling to allow for some flexibility in the filament (e.g. by maintaining a temperature that allows some bending), which may allow for realignment of the unspooled filament with a feeding mechanism or other component of a 3D printing apparatus. In this way it may not be necessary to regularly correct for the position of the bending point of the unspooling material relative to the relevant component of the 3D printing apparatus (e.g. the feeder mechanism). The mechanism for maintaining a sufficient temperature of the filament may be any convenient device, such as a laser source, a heated chamber, heated rollers or any other suitable heating elements as may be provided.

In embodiments, the speed of rotation of the glass spool may be adjusted and controlled to ensure a constant rate of unspooling (as discussed in relation to spooling) so that the glass filament is heated to the desired temperature at the time of bending. On the other hand, it will be appreciated that the speed of unspooling should suitably be matched to the printing speed, to ensure a consistent speed of unspooling for printing. This is particularly important where a continuous unspooling and printing process is desired. It will therefore be appreciated that a slower (or faster) rate of unspooling may be achieved in comparison to a spooling operation.

Advantageously, by way of the unspooling process of this disclosure, a constant glass rod 'reservoir' for printing may be provided, which eliminates the need to abut discrete glass (or metal) rods and the consequential surface-surface interfaces, which importantly - in accordance with aspects and embodiments of this disclosure - reduces the risk of striae or bubbles forming in the printing object.

Figure 3C shows a schematic representation of a cross section of a glass filament at the bending point (409) of a spooling and unspooling process. As will be apparent, the left image illustrates an apparatus and process using a single laser (407) to heat the glass filament (401) and the right image illustrates an arrangement and method utilising three lasers (407a, 407b, 407c) to heat the glass filament (401).

In embodiments, the glass filament or spool may be preheated before it is heated by the laser or other heat source.

In various embodiments, a speed increase in spooling or unspooling can be achieved by preheating the glass filament. In this way, the filament may be more quickly heated to the desired softening / glass transition temperature without risking ablation of the glass material. For example, in this way, the speed of spooling (or unspooling) may be increased by at least 10 or 20%, such as up to about 100%, up to about 75%, up to about 50% or up to about 25%, according to the desired process speed, or as may be convenient. Preheating of the glass filament may have other beneficial effects also, for example, condensed water and other vapors on the rod or spool surface may be evaporated before being exposed to the high temperature zone of the heat source / laser beam at the bending point.

Preheating of the filament may be achieved by any suitable means, for example, in an oven, by radiant heat, or using any other laser or heat source, for example, in some embodiments, a low power or diffuse heat source may be directed towards the glass spool so that the glass spool is maintained at above ambient / room temperate before it reaches the point at which heat treatment for unspooling or spooling is provided. In other embodiments, the rotating member may alternatively provide heat to the spool.

As noted above, if beam overlapping can be substantially avoided to prevent heating at the same location on the surface of the glass filament, increasing the number of laser sources, e.g. by adding 1 or 2 additional lasers (or laser beams) to the single laser process as shown in Figure 3C can result in an increase of the process speed by a factor of two or three.

In this regard, the penetration depth through glass of light energy from a laser may determine the speed and effectiveness with which a glass filament can be melted and bent without causing ablation. In the case of a CO₂ laser beam, the energy is typically absorbed by the glass within a small volume at the surface of the glass due to the very small penetration depth of only a few microns for a CO₂ laser with 10.6 µm central wavelength. Consequently, the surface of the glass filament is heated rapidly, but volumetric heating of the glass rod relies on subsequent thermal diffusion. This is the rate limiting step for volumetric heating of a glass filament using a CO₂ laser as a heat source, and another reason why spooling and unspooling speed may be strongly dependent on the thickness / diameter of the glass filament.

Accordingly, depending on the diameter of the glass filament, the use of more than two or three (CO₂) lasers and/or increasing the laser power and intensity of light energy may be detrimental to the integrity of the glass by rapidly causing saturation of absorbed energy at the surface of the glass, with consequential overheating and local ablation of glass. As such, it is expected that there may be a limit to the ultimate speed of spooling and unspooling that can be achieved before heat energy saturation causes a detrimental effect on the result.

Therefore, the maximum spooling and unspooling speed range is suitably of the order of 20 mm/s to 50 mm/s, which would achieve a spooling time of 0.5 hours to 1.5 hours for a 100 m long glass filament. This speed is approximately a factor of two to five times faster than the speed currently and typically used extrusion of glass rods / filaments during 3D glass printing, and so the rate of unspooling of a glass filament according to this disclosure should not limit the speed of glass 3D printing using glass spools provided in accordance with the present disclosure.

### EXAMPLES

### Example 1 - Laser assisted unspooling

A CO₂ laser with a main de-excitation transition at 10.6 µm wavelength and a second transition at 9.6 µm, a linewidth in the order of a few hundred MHz (unstabilised), and a laser intensity of about 2 W/mm² was used to test the parameters for spooling and unspooling of a glass filament comprising soda-lime glass . Soda-lime glass has a process temperature of approx. 1,040°C, although glasses with a lower or higher process temperature may be used.

Spooling and unspooling tests were conducted on glass rods having lengths of between 100 mm and 150 mm, and a rod diameter of approx. 3 mm. A rotating cylinder / spool having a diameter of 200 mm was used, and spooling and unspooling time was between 12 and 15 seconds based on an achieved spooling velocity of 8 mm/s to 10 mm/s.

The achieved speed range of unspooling of between 8 and 10 mm/s is beneficial, since is matches the glass filament extrusion speeds for a typical glass 3D printing process, e.g. using the system described with reference to Figures 1 and 3 above.

By increasing the power of the laser, a speed increase in the order of 10% to 20% was then achieved. In this way, a 100 m long glass filament was fully spooled in a timeframe of between 2.5 hours and 3.5 hours. A spooling process of this timeframe and a glass rod spool of the described length are suitable for an industrially scalable glass 3D printing process.

It will be appreciated that various changes and modifications can be made to the present invention without departing from the scope of the present application.

### CLAUSES

Various aspects and embodiments of the inventive concept are set out in each of the following numbered clauses.
1. A system or apparatus for spooling or unspooling of a filament or rod, the system comprising a heat source configured to provide heat to a first region of the filament or rod; and a rotatable member configured to rotate around its central axis of symmetry so as to spool the filament or rod onto the rotatable member or off the rotatable member.
2. The system or apparatus of Clause 1, wherein the heat source is selected from one or more of a laser, a plasma torch, a gas torch, an electron beam, an ion beam, an inductively heated metal part and combinations thereof.
3. The system or apparatus of Clause 1 or Clause 2, wherein the heat source is a directional heat source, such that heat energy is delivered to a target area on the filament or rod within the first region; optionally wherein the target area of the filament or rod, in use, is adjacent to the rotatable member.
4. The system or apparatus of any of Clauses 1 to 3, wherein the heat source comprises at least one laser.
5. The system or apparatus of Clause 4, wherein the heat source comprises one, two or three lasers.
6. The system or apparatus of Clause 4 or Clause 5, wherein the laser is selected from a CO₂ laser, a CO laser or a laser diode.
7. The system or apparatus of Clause 6, wherein the laser is a CO₂ laser.
8. The system or apparatus of Clause 7, wherein the laser has a central wavelength of between about 9 µm and about 12 µm, between about 9 µm and about 11 µm, between about 9.3 µm and about 10.6 µm, or between about 9.6 µm and about 10.6 µm.
9. The system or apparatus of Clause 7 or Clause 8, wherein the laser has a central wavelength of 10.3 µm, 10.4 µm, 10.5 µm or 10.6 µm.
10. The system or apparatus of Clause 6, wherein the laser is a CO laser.
11. The system or apparatus of Clause 10, wherein the laser has a central wavelength of between about 3 µm and about 6 µm, between about 4 µm and about 6 µm, between about 5 µm and about 6 µm, or between about 5.2 µm and about 6 µm.
12. The system or apparatus of Clause 11, wherein the laser has a central wavelength of 5.0 µm, 5.1 µm, 5.2 µm, 5.3 µm, 5.4 µm or 5.5 µm.
13. The system or apparatus of Clause 6, wherein the laser is a laser diode.
14. The system or apparatus of Clause 13, wherein the laser has a central wavelength of between about 2 µm and about 4 µm, between about 2 µm and about 3 µm, or between about 2.2 µm and about 2.8 µm.
15. The system or apparatus of Clause 14, wherein the laser has a central wavelength of 2.3 µm, 2.4 µm, 2.5 µm or 2.6 µm.
16. The system or apparatus of any of Clauses 4 to 15, wherein the intensity of the laser is between about 1 and about 10 W/mm², between about 2 W/mm² and 8 W/mm² or between about 3 W/mm² and 7 W/mm².
17. The system or apparatus according to any of Clauses 16, wherein the laser has an intensity of 2 W/mm², 3 W/mm², 4 W/mm², 5 W/mm² or 6 W/mm².
18. The system or apparatus of any preceding clause, which comprises a heat source controller so as to control the activity and/or power of the heat source.
19. The system or apparatus of Clause 18, wherein the heat source is controlled to deliver a constant amount of heat energy per unit time.
20. The system or apparatus of Clause 18 or Clause 19, wherein the heat source is controlled according to the desired temperature of the filament material at the target region.
21. The system or apparatus of any of Clauses 18 to 20, wherein the heat source controller communicates with a feedback mechanism for adjusting the power or temperature of the heat source.
22. The system or apparatus of Clause 21, wherein the power or temperature of the heat source is controlled according to the temperature of the feed stock, the desired temperature of the feed stock, the speed / rate of spooling or unspooling, the linear speed of movement of the filament prior to spooling or after unspooling, or the rotational speed of the rotatable member, the mass of feedstock to be spooled or unspooled in a particular unit time, the thickness of the filament or rod, and/or the material or composition of the filament.
23. The system or apparatus of any preceding clause, which comprises apparatus for focussing the heat source at a desired point or area of the filament.
24. The system or apparatus of Clause 23, wherein the apparatus for focussing the heat source is selected from at least one mirror, at least one lens, at least one laser beam splitter or combinations thereof.
25. The system or apparatus of Clause 23 or Clause 24, wherein the apparatus for focussing the heat source comprises one mirror, two mirrors or three mirrors.
26. The system or apparatus of any of Clauses 23 to 25, wherein the apparatus for focussing the heat source comprises one lens, two lenses or three lenses.
27. The system or apparatus of Clause 4, or any of Clauses 5 to 26 when dependent on Clause 4, wherein the diameter of the laser beam is controlled according to the diameter of the filament; suitably wherein the diameter of the laser beam is controlled to be within about 40%, about 30%, about 25%, about 20%, about 15%, about 10% or about 5% of the diameter of the filament.
28. The system or apparatus of any one of the preceding claims, wherein the system further comprises a remote temperature sensing device, in use, configured to measure the surface temperature at a target region of the filament or rod; optionally, wherein the remote temperature sensing device is selected from a heat sensor, an IR camera, a pyrometer or combinations thereof.
29. The system or apparatus of any preceding clause, which comprises a temperature or heat sensor for monitoring or measuring the temperature of the filament at a target region of the filament or rod.
30. The system or apparatus of Clause 29, wherein the temperature or heat sensor is configured to signal a temperature of the filament at the target region to a controller for controlling the power of the heat source or to control the amount of heat energy delivered to the filament material from the heat source.
31. The system or apparatus of any preceding clause, wherein the rotatable member is configured to receive a spooled filament.
32. The system or apparatus of any preceding clause, wherein the rotatable member is made of one or more material selected from the group consisting of: stainless steel, silicon carbide or non-thermoplastic polymer.
33. The system or apparatus of any preceding clause, wherein the rotatable member is coupled to a motor configured to rotate the rotatable member, in use, at a desired speed of rotation.
34. The system or apparatus of Clause 33, wherein the motor is configured to rotate in a clockwise and/or a counter-clockwise direction.
35. The system or apparatus of any preceding clause, which comprises at least one filament guide to guide the filament towards or away from the rotatable member.
36. The system or apparatus of any preceding clause, which comprises a filament pushing or a pulling mechanism in order to push the filament towards the rotatable member or to pull the filament away from the rotatable member at a desired velocity.
37. The system or apparatus of Clause 35 or Clause 36, which comprises at least one adjustment mechanism for adjusting the position and/or orientation of the filament guide relative to the rotatable member; and/or for adjusting the position and/or orientation of the filament pushing or pulling mechanism relative to the rotatable member.
38. The system or apparatus of any preceding clause, which includes a 3D printing apparatus comprising a printing nozzle.
39. The system or apparatus of any preceding clause, comprising a heat source configured to provide heat to a second region of the filament or rod, wherein the second region is with respect to the rotatable member distal of the first region.
40. The system or apparatus of Clause 39, wherein the heat source to provide heat to a second region of the filament or rod is selected from any one or more of a source or radiant heat, a source of directional heat, a heated chamber; or one or more of a laser, a plasma torch, a gas torch, an electron beam, an ion beam, an inductively heated metal part (such as one or more rollers or wheels) and combinations thereof.
41. The system or apparatus of Clause 39 or 40, wherein the heat source to provide heat to a second region of the filament or rod is configured to maintain the temperature of the second region of the filament or rod at or between a minimum target temperature and/or a maximum target temperature.
42. The system or apparatus of any preceding clause, which comprises a filament or rod of material to be spooled or unspooled, and wherein the filament or rod comprises a glass or a metal material.
43. The system or apparatus of Clause 42, wherein the filament or rod is a glass material selected from a Schott glass a Bullseye glass, a soda-lime glass, an AR-Schott glass, a quartz glass or a borosilicate glass.
44. The system or apparatus of Clause 42 or Clause 43, wherein the filament or rod has a diameter of between about 0.5 mm and about 18 mm, between about 1 mm and about 15 mm, between about 2 mm and about 12 mm, or between about 3 mm and about 10 mm.
45. The system or apparatus of any of Clauses 42 to 44, wherein the filament or rod has a diameter of about 2 mm, about 4 mm, about 6 mm, about 8 mm, about 10 mm, or about 12 mm.
46. The system or apparatus of any preceding clause, which is configured to spool or unspool the filament or rod at a target speed of between about 1 mm/s and about 20 mm/s, between about 2 mm/s and about 18 mm/s, between about 3 mm/s and about 16 mm/s, between about 4 mm/s and about 14 mm/s, between about 6 mm/s and 12 mm/s or between about 8 mm/s and about 10 mm/s.
47. The system or apparatus of Clause 45 or Clause 46, wherein the rotatable member is controllable to rotate at an angular velocity sufficient to cause a point on the circumference of the rotatable member or spool or filament material over the rotatable member at the target speed.
48. The system or apparatus of Clause 47, wherein the speed of rotation of the rotatable member is adjustable to control the linear rate or spooling or unspooling of the filament or rod in dependence on the diameter or radius of the rotatable member and/or the spool or filament material over the rotatable member.
49. The system or apparatus of Clause 45 or Clause 46 when dependent on Clause 34, wherein the filament pushing or pulling mechanism is controllable to push or pull, respectively, the filament at the target speed.
50. The system or apparatus of any preceding clause, wherein the heat source is configured to heat a target region of the filament or rod to a temperature of between about 800°C and about 1,300°C, between about 850°C and about 1,250°C, between about 900 and about 1,200 or between about 950°C and about 1,150°C.
51. The system or apparatus of Clause 50, wherein the heat source is configured to heat a target region of the filament or rod to a temperature of about 900°C, about 950°C, about 1,000°C, or about 1,040°C.
52. A method for coiling or uncoiling a glass or metal filament or rod in order to increase or decrease the amount of material in a spool of the filament or rod, the method comprising the steps of:
   (i) providing a heat source;
   (ii) heating a target region of the filament or rod with the heat source to a target or process temperature; and
   (iii) simultaneously rotating a portion of the filament or rod about a central axis of symmetry of the spool in a coiling direction or an uncoiling direction.
53. The method of Clause 52, wherein in the coiling direction the form of the filament or rod is changed from substantially linear to curved and wherein in the uncoiling direction the form of the filament or rod is changed from curved to substantially linear.
54. The method of Clause 52 or Clause 53, wherein the rate or coiling or uncoiling of the filament or rod is controlled to be a target speed; preferably wherein the target speed is substantially constant such that the length of filament or rod that is coiled or uncoiled in any unit time is substantially constant.
55. The method of any of Clauses 52 to 54, wherein the target speed is between about 1 mm/s and about 20 mm/s, between about 2 mm/s and about 18 mm/s, between about 3 mm/s and about 16 mm/s, between about 4 mm/s and about 14 mm/s, between about 6 mm/s and 12 mm/s or between about 8 mm/s and about 10 mm/s.
56. The method of any of Clauses 52 to 55, wherein the filament or rod comprises a glass or a metal material.
57. The method of Clause 56, wherein the filament or rod is a glass material selected from a Schott glass a Bullseye glass, an AR-Schott glass, a soda-lime glass, a quartz glass or a borosilicate glass.
58. The method of any of Clauses 52 to 57, wherein the filament or rod has a diameter of between about 0.5 mm and about 18 mm, between about 1 mm and about 15 mm, between about 2 mm and about 12 mm, or between about 3 mm and about 10 mm.
59. The method of Clause 58, wherein the filament or rod has a diameter of about 2 mm, about 4 mm, about 6 mm, about 8 mm, about 10 mm, or about 12 mm.
60. The method of any of Clauses 56 to 59, wherein the target region of the filament or rod is heated to a temperature of between about 800°C and about 1,300°C, between about 850°C and about 1,250°C, between about 900 and about 1,200 or between about 950°C and about 1,150°C; optionally wherein the target or process temperature is a temperature range.
61. The method of Clause 60, wherein the target region of the filament or rod is heated to a temperature of about 900°C, about 950°C, about 1,000°C, or about 1,040°C.
62. The method of any of Clauses 52 to 61, wherein the heat source is selected from one or more of a laser, a plasma torch, a gas torch, electron beam, ion beam, a inductively heated metal part and combinations thereof.
63. The method of any of Clauses 52 to 62, wherein the heat source is a directional heat source, such that heat energy is delivered to a target area on the filament or rod.
64. The method of any of Clauses 52 to 63, wherein the heat source is provided by at least one laser.
65. The method of any of Clauses 52 to 64, wherein the heat source is provided by one, two or three lasers.
66. The method of Clause 64 or Clause 65, wherein the laser is selected from a CO₂ laser, a CO laser or a laser diode.
67. The method of Clause 66, wherein the laser is a CO₂ laser.
68. The method of Clause 67, wherein the laser has a central wavelength of between about 9 µm and about 12 µm, between about 9 µm and about 11 µm, between about 9.3 µm and about 10.6 µm, or between about 9.6 µm and about 10.6 µm.
69. The method of any of Clause 67 or Clause 68, wherein the laser has a central wavelength of 10.3 µm, 10.4 µm, 10.5 µm or 10.6 µm.
70. The method of Clause 66, wherein the laser is a CO laser.
71. The method of Clauses 70, wherein the laser has a central wavelength of between about 3 µm and about 6 µm, between about 4 µm and about 6 µm, between about 5 µm and about 6 µm, or between about 5.2 µm and about 6 µm.
72. The method of Clause 71, wherein the laser has a central wavelength of 5.0 µm, 5.1 µm, 5.2 µm, 5.3 µm, 5.4 µm or 5.5 µm.
73. The method of Clause 66, wherein the laser is a laser diode.
74. The method of Clause 73, wherein the laser has a central wavelength of between about 2 µm and about 4 µm, between about 2 µm and about 3 µm, or between about 2.2 µm and about 2.8 µm.
75. The method of Clause 74, wherein the laser has a central wavelength of 2.3 µm, 2.4 µm, 2.5 µm or 2.6 µm.
76. The method of any of Clauses 64 to 75, wherein the intensity of the laser is between about 1 and about 10 W/mm², between about 2 W/mm² and 8 W/mm² or between about 3 W/mm² and 7 W/mm².
77. The method of Clause 76, wherein the laser has an intensity of 4 W/mm², 5 W/mm² or 6 W/mm².
78. The method of any of Clauses 52 to 77, comprises providing a heat source controller configured to control the activity and/or power of the heat source.
79. The method of Clause 78, comprising controlling the heat source to deliver a constant amount of heat energy per unit time.
80. The method of Clause 78 or Clause 79, comprising controlling the heat source according to the desired temperature of the filament or rod material at a target region of the filament or rod.
81. The method of Clause 80, comprising adjusting the power or temperature of the heat source dependent on one or more of: the temperature of the filament or rod, the desired temperature of the feed stock, the speed / rate of spooling or unspooling, the linear speed of movement of the filament prior to spooling or after unspooling, or the rotational speed of the rotatable member, the mass of feedstock to be spooled or unspooled in a particular unit time, the thickness of the filament or rod, or the material or composition of the filament.
82. The method of any of Clauses 52 to 81, comprising focussing the heat source at a desired target area, point or region of the filament; optionally wherein the target area, point or region is adjacent the spool.
83. The method of Clause 82, wherein focussing the heat source comprises providing at least one mirror, at least one lens, at least one laser beam splitter or combinations thereof to direct the heat source to the target area, point or region.
84. The method of Clause 64, or any of Clauses 65 to 83 when dependent on Clause 64, comprising controlling the diameter of the laser beam according to the diameter of the filament or rod; suitably wherein the diameter of the laser beam is controlled to be within about 40%, about 30%, about 25%, about 20%, about 15%, about 10% or about 5% of the diameter of the filament.
85. The method of any of Clauses 52 to 84, comprising measuring the surface temperature of the filament or rod at the target region.
86. The method of Clause 85, wherein the temperature of the target region of the filament or rod is measured using a remote temperature sensing device.
87. The method of Clause 86, wherein the remote temperature sensing device is selected from an IR camera, a pyrometer, a heat sensor or combinations thereof.
88. The method of Clause 87, wherein the remote temperature sensing device is configured to signal a temperature of the filament at the target region to a controller for controlling the power of the heat source or to control the amount of heat energy delivered to the filament material from the heat source.
89. The method of any of Clauses 52 to 88, wherein rotating the filament or rod comprises providing a rotatable member configured to receive a spooled filament or rod, and rotating the rotatable member in a clockwise or a counter-clockwise direction.
90. The method of Clause 89, comprising providing a motor coupled to the rotatable member and configured to rotate the rotatable member, in use, at a desired speed of rotation; optionally, wherein the motor is operably coupled to a motor controller to control the speed of rotation of the rotatable member.
91. The method of any of Clauses 52 to 90, comprising guiding the filament or rod towards or away from the rotatable member in substantially a straight line.
92. The method of any of Clauses 52 to 91, comprising simultaneously with heating the filament or rod, pushing or pulling the filament or rod past the heat source at a desired linear velocity.
93. The method of any of Clauses 52 to 92, comprising adjusting the position and/or orientation of the spool or of the filament or rod in order to maintain heating of the target region of the filament or rod by the heat source.
94. The method of any of Clauses 52 to 93, comprising adjusting the position and/or orientation of the heat source in order to maintain heating of the target region of the filament or rod by the heat source.
95. The method of any of Clauses 52 to 94, which further comprises printing a 3D object with material from the spool.
96. The method of any of Clauses 52 to 95, comprising moving the filament or rod at a target speed of between about 1 mm/s and about 20 mm/s, between about 2 mm/s and about 18 mm/s, between about 3 mm/s and about 16 mm/s, between about 4 mm/s and about 14 mm/s, between about 6 mm/s and 12 mm/s or between about 8 mm/s and about 10 mm/s during spooling or unspooling.
97. The method of Clause 96, wherein the speed of rotating a portion of the filament or rod about a central axis of symmetry of the spool in a coiling direction or an uncoiling direction is controlled according to the target speed of spooling or unspooling.
98. The method of Clause 92 or any of Clauses 93 to 97 when dependent on Clause 92, wherein during unspooling of the filament or rod, the filament or rod is pulled by a filament feeding system of a 3D printing system.
99. The method of any of Clauses 52 to 98, comprising providing a heat source configured to provide heat to a second region of the filament or rod, wherein the second region is with respect to the spool distal of the first region.
100. The method of Clause 99, wherein providing the heat source to provide heat to a second region of the filament or rod comprises providing a heat source selected from any one or more of a source or radiant heat, a source of directional heat, a heated chamber; or one or more of a laser, a plasma torch, a gas torch, an electron beam, an ion beam, an inductively heated metal part (such as one or more rollers or wheels) and combinations thereof.
101. The method of Clause 99 or 100, wherein providing the heat source to provide heat to a second region of the filament or rod comprises providing a heat source configured to maintain the temperature of the second region of the filament or rod at or between a minimum target temperature and/or a maximum target temperature.
102. The method of any of Clauses 52 to 101, which comprises attaching one end of the filament or rod material to the spool.
103. The method of Clause 102, wherein attaching one end of the filament or rod to the spool comprises clamping or gluing.
104. The method of Clause 103, wherein clamping one end of the filament or rod to the spool comprises providing a metal plate preloaded with a spring to press the end of the filament or rod material against the spool.
105. The system or apparatus of any of Clauses 1 to 51, wherein one end of the filament or rod material is fixed to the rotatable member.
106. The system or apparatus of Clauses 105, wherein the end of the filament or rod is fixed to the rotatable member by a clamp or glue.
107. The system or apparatus of Clause 106, wherein the clamp comprises a metal plate preloaded with a spring to press the end of the filament or rod material against the rotatable member.

## Claims

1. A system for spooling or unspooling of a filament or rod, the system comprising a heat source configured to provide heat to a target region of the filament or rod; and a rotatable member configured to rotate around its central axis of symmetry so as to spool the filament or rod onto the rotatable member or off the rotatable member.

2. The system of Claim 1, wherein the heat source comprises at least one laser; optionally wherein the laser is a CO₂ laser.

3. The system of Claim 1 or Claim 2, wherein the laser has:
(i) a central wavelength of 10.3 µm, 10.4 µm, 10.5 µm or 10.6 µm; and/or
(ii) an intensity of between about 1 and about 10 W/mm², between about 2 W/mm² and 8 W/mm² or between about 3 W/mm² and 7 W/mm².

4. The system of any preceding clause, which comprises a heat source controller so as to control the activity and/or power of the heat source; optionally wherein the heat source controller communicates with a feedback mechanism for adjusting the power or temperature of the heat source.

5. The system of Claim 4, wherein the power or temperature of the heat source is controlled according to the temperature of the feed stock, the desired temperature of the filament at the target region, the speed / rate of spooling or unspooling, the linear speed of movement of the filament prior to spooling or after unspooling, or the rotational speed of the rotatable member, the mass of feedstock to be spooled or unspooled in a particular unit time, the thickness of the filament or rod, or the material or composition of the filament.

6. The system of any preceding clause, which comprises apparatus for focussing the heat source at a desired target area within the target region of the filament; and wherein the apparatus for focussing the heat source is selected from at least one mirror, at least one lens, at least one laser beam splitter or combinations thereof; optionally wherein the target area is adjacent to the rotatable member.

7. The system of any preceding claims, wherein the system or apparatus further comprises a remote temperature sensing device, in use, configured to measure the surface temperature at the target region (or target area) of the filament or rod; optionally, wherein the remote temperature sensing device is selected from a heat sensor, an IR camera, a pyrometer or combinations thereof.

8. The system of Claim 7, wherein the temperature or heat sensor is configured to signal a temperature of the filament at the target region to a controller for controlling the power of the heat source or to control the amount of heat energy delivered to the filament material from the heat source.

9. The system of any preceding clause, which comprises at least one filament guide to guide the filament towards or away from the rotatable member; optionally comprising at least one adjustment mechanism for adjusting the position and/or orientation of the filament guide relative to the rotatable member.

10. The system of any preceding clause, which includes a 3D printing apparatus comprising a printing nozzle.

11. The system of any preceding clause, which comprises a filament or rod of material to be spooled or unspooled, and wherein the filament or rod comprises a glass or a metal material; optionally wherein the filament or rod has a diameter of between about 0.5 mm and about 18 mm, between about 1 mm and about 15 mm, between about 2 mm and about 12 mm, or between about 3 mm and about 10 mm.

12. The system of Claim 11, wherein the filament or rod is a glass material selected from a Schott glass, a Bullseye glass, an AR-Schott glass, a soda-lime glass, a quartz glass or a borosilicate glass.

13. The system of any preceding claim, wherein the speed of rotation of the rotatable member is adjustable to control the linear rate or spooling or unspooling of the filament or rod in dependence on the diameter or radius of the rotatable member and/or the spool or filament material over the rotatable member.

14. A method for coiling or uncoiling a glass or metal filament or rod in order to increase or decrease the amount of material in a spool of the filament or rod, the method comprising the steps of:
(i) providing a heat source;
(ii) heating a target region of the filament or rod with the heat source to a target or process temperature; and
(iii) simultaneously rotating a portion of the filament or rod about a central axis of symmetry of the spool in a coiling direction or an uncoiling direction.

15. The method of Claim 14, comprising one or more of the system or apparatus features of any of Claims 1 to 13.
